# FASCICULE DE BREVET EUROPEEN

(11) **EP 2 294 019 B1**
(45) Date de publication et mention de la délivrance du brevet: **01.04.2020**
(21) Numéro de dépôt: 09772409.0
(22) Date de dépôt: 30.06.2009
(51) Int. Cl.: C03B 5/235, F23D 14/32

(54) **ALIMENTATION DE BRÛLEUR À OXYGÈNE CHAUD**
EINSPEISUNG FÜR HEISSEN SAUERSTOFFBRENNER
HOT OXYGEN BURNER SUPPLY

(30) Priorité: 02.07.2008 EP 08104609
(43) Date de publication de la demande: 16.03.2011
(73) Titulaire: AGC Glass Europe, 1348 Louvain-la-Neuve (BE); L'Air Liquide Société Anonyme pour l'Etude et l'Exploitation des Procédés Georges Claude, 75007 Paris (FR)
(72) Inventeur: AMIRAT, Mohand, 28320 Gas (FR); BEHEN, Johan, B-6040 Jumet (BE); CONSTANTIN, Gabriel, 78530 Buc (FR); DOUXCHAMPS, Olivier, B-6040 Jumet (BE); GRAND, Benoit, 28320 Gas (FR); TSIAVA, Rémi, 91250 Saint Germain-les-Corbeil (FR); WAGEMANS, Fabrice, B-6040 Jumet (BE)
(74) Mandataire: Le Vaguerèse, Sylvain Jacques
(86) Numéro de dépôt international: PCT/EP2009/058139
(87) Numéro de publication internationale: WO 2010/000709

(56) Documents cités:
- WO-A-2004/094902
- WO-A-2007/074278
- DE-A1-102005 005 832
- US-A- 5 807 418
- US-A1- 2003 157 450
- US-A1- 2007 281 254
- US-A1- 2007 287 107

## Description

La présente invention concerne la mise en œuvre de brûleurs fonctionnant avec de l'oxygène porté à température élevée et des combustibles à l'état gazeux ou liquide. Des brûleurs de ce type sont destinés en particulier, mais de façon non exclusive, à une utilisation dans les fours de fusion du verre. Le mode de combustion utilisant de l'oxygène ou un gaz riche en oxygène (au moins 85% d'oxygène) est dit "oxy-combustion".

L'oxy-combustion comparée à l'aéro-combustion, utilisant donc de l'air, permet un gain énergétique au moins pour la raison que l'énergie des gaz de combustion n'est pas absorbée en partie par l'azote de l'air. Dans les fours traditionnels, même si une partie de l'énergie entraînée avec l'azote est récupérée, les fumées finalement évacuées, comprenant l'azote, en entraînent encore une part significative.

La réduction de la consommation énergétique par unité de production considérée présente l'avantage supplémentaire de limiter les émissions de dioxyde de carbone, et donc de favoriser le respect des exigences règlementaires dans ce domaine.

La présence d'azote est par ailleurs source de formation d'oxydes dits NOx, dont l'émission est pratiquement interdite en raison des dommages liés à la présence de ces composés dans l'atmosphère.

Dans la pratique les utilisateurs se sont efforcés de faire fonctionner les fours opérant avec de l'air dans les conditions conduisant à des émissions aussi limitées que possible. Dans le cas des fours de verrerie, ces pratiques ne suffisent pas pour satisfaire aux normes très sévères en vigueur, et il est nécessaire de procéder à une dépollution coûteuse des fumées par l'usage de catalyseurs.

En dépit des avantages énoncés ci-dessus, l'utilisation de l'oxy-combustion, notamment dans les grands fours verriers, reste à développer. Les raisons sont de plusieurs natures. Un frein réside dans le coût de l'oxygène. Celui-ci est en principe compensé par les économies réalisées par ailleurs. Il entre néanmoins en ligne de compte dans la mesure où s'ajoutent les investissements en matériel spécifique pour l'utilisation de l'oxygène.

Le bilan économique de la mise en œuvre de l'oxy-combustion n'est positif que dans la mesure où l'on optimise les conditions de mise en oeuvre. Pour ce qui concerne le rendement énergétique, ceci impose l'utilisation d'oxygène à température élevée, à savoir une température de plusieurs centaines de degrés.

Accessoirement il est aussi utile de procéder dans une certaine mesure au chauffage préalable du combustible et à celui des matières premières.

Le chauffage préalable de l'oxygène et son utilisation constituent des opérations délicates. Les difficultés soulevées viennent notamment du caractère extrêmement corrosif de l'oxygène chaud pour les matériaux utilisés à son contact, notamment pour les alliages métalliques.

Si les inventeurs dans une demande antérieure non-publiée (demande européenne 07.107.942 déposée le 10 mai 2007) ont proposé des échangeurs thermiques permettant de chauffer l'oxygène de façon satisfaisante, l'utilisation de cet oxygène chaud pose également des problèmes spécifiques dans la conduite des fours, et en particulier des fours verriers.

On sait que les grands fours de fusion du verre, fours qui présentent des capacités de production de plusieurs centaines de tonnes par jour, sont construits de manière à fonctionner sans interruption pendant des périodes dépassant la dizaine d'années. Cette durée de vie est déterminée principalement par l'usure des réfractaires qui en constituent les parois.

Pendant ces très longues durées les autres éléments du four et notamment les bruleurs doivent conserver toutes leurs performances initiales. Deux causes principales sont susceptibles de modifier leurs caractéristiques. D'une part la circulation des gaz chauds, notamment de l'oxygène, conduit à l'usure des moyens d'injection. D'autre part les combustibles soumis à de très hautes températures dans les canalisations proches de la zone de combustion, peuvent conduire à des dépôts qui perturbent le flux de ces combustibles. Ce dernier effet est sensible notamment lors de l'utilisation de fuels lourds lorsque ceux-ci sont exposés à des températures dépassant par exemple 180°C. Mais à un degré moindre la dégradation des combustibles gazeux peut aussi se produire, même si elle n'intervient de manière significative que pour des températures dépassant les 600°C.

Quels que soient les combustibles choisis, la maintenance des moyens d'injection des combustibles doit intervenir de manière régulière tout au long de la vie du four.

Les opérations de maintenance doivent être conduites sans interrompre le fonctionnement du four. Une difficulté est de concevoir les brûleurs et les moyens d'alimentation qui leur sont associés de telle sorte que ces opérations soient réalisables dans des conditions relativement aisées et rapides. Les inventeurs se sont efforcés de proposer des moyens et les façons de mise en œuvre de ceux-ci, permettant de répondre à cette question.

Les inventeurs ont tout d'abord constaté que l'acheminement de l'oxygène chaud impose l'utilisation de moyens spécifiques. Le caractère éminemment corrosif de l'oxygène chaud conduit à limiter sa circulation à des trajets aussi courts que possible. Il convient également d'éviter l'impact du flux d'oxygène dans des canalisations présentant des courbures trop accentuées. Il est encore souhaitable d'éviter toutes les irrégularités de surface sur le trajet de ce gaz. En particulier les raccords sont de préférence réalisés par soudure avec une surface polie de ces soudures.

Ces exigences, et d'autres encore, dans la conduite de l'oxygène chaud font que les moyens mis en œuvre sont essentiellement fixes. Ces moyens ne se prêtent donc pas aux opérations de maintenance évoquées ci-dessus.

Pour tenir compte de ces difficultés, les inventeurs proposent de configurer les brûleurs de telle sorte que les moyens d'introduction des combustibles puissent être l'objet de ces opérations de maintenance, sans qu'il soit nécessaire d'intervenir sur ceux de l'oxygène chaud.

Pour parvenir à ce résultat l'invention propose de mettre en œuvre le procédé selon la revendication 1. Le détail des éléments de ce procédé fait l'objet de la suite de cette description, et ces détails sont l'objet de revendications subsidiaires.

Le mode d'alimentation des brûleurs selon l'invention comprend de façon générale d'une part des moyens d'alimentation en combustible, moyens qui sont combinés avec une alimentation en oxygène essentiellement non chauffé, et d'autre part des moyens d'alimentation en oxygène chaud indépendants des premiers.

Pour conserver au système l'avantage du bilan énergétique inhérent à l'utilisation de l'oxygène chaud, la fraction d'oxygène non chauffé doit rester aussi faible que possible. Dans une disposition où le combustible et l'oxygène chaud sont introduits de façon distincte dans le brûleur, autrement dit en des points séparés même si la distance reste modeste, il est nécessaire de prévoir une fraction de l'oxygène pour entretenir et stabiliser la flamme au niveau de l'injection du combustible. Pour obtenir cette combustion partielle qualifiée de "primaire", la proportion de l'oxygène par rapport à l'ensemble nécessaire à la combustion totale est très faible. Dans tous les cas cette fraction est inférieure à 10% de l'ensemble de l'oxygène consommé par le brûleur considéré. Avantageusement cette proportion est comprise entre 1,5 et 7% de l'ensemble de l'oxygène nécessaire pour assurer la combustion complète du combustible.

On comprend que le bénéfice de l'utilisation de l'oxygène chaud ne soit pas sensiblement affecté par cette fraction très restreinte d'oxygène non chauffé.

Par non-chauffé, il faut entendre que l'oxygène se trouve dans les conditions de température essentiellement ambiantes qui règnent sur son trajet l'acheminant vers le four. Au passage des parois réfractaires du four sa température s'élève nécessairement. L'important est que les canalisations précédant cette introduction ne soient pas soumises à l'action de l'oxygène chaud. La température de l'oxygène est de préférence la température ambiante et ne doit pas dépasser une centaine de degrés, la température au voisinage du four étant néanmoins sensiblement plus élevée que celle de l'atmosphère à distance du four.

L'introduction dans le four de cette fraction d'oxygène non chauffé doit se faire à proximité immédiate de celle du combustible, ou mieux cette introduction doit être simultanée. Pour éviter une réaction prématurée dans les canalisations, le combustible et l'oxygène chaud sont néanmoins acheminés dans des conduites distinctes jusqu'au point d'inflammation qui se situe à proximité de la paroi interne du four. Dans une disposition préférée l'extrémité de l'injecteur de combustible est située en léger retrait dans la paroi réfractaire pour ne pas porter cette extrémité à trop haute température, et éviter la formation de dépôts par craquage du combustible et/ou la dégradation de l'extrémité des injecteurs.

Comme indiqué ci-dessus l'essentiel de l'alimentation en oxygène est faite en oxygène chaud. Les alliages les plus résistants connus (présentés dans la demande citée plus haut) permettent de véhiculer de l'oxygène à 550°C ou au mieux à 600°C et à l'extrême à 650°C, sans encourir de dommages même sur de longues périodes. Les températures de l'oxygène utilisé ne dépassent pas ces limites, et peuvent se situer notamment entre 350 et 550°C.

L'admission de cet oxygène chaud peut se faire dans le voisinage de l'introduction du combustible dans la mesure où les canalisations demeurent distinctes, afin de pouvoir intervenir sur celles de combustible sans toucher à celles d'oxygène chaud. Néanmoins il est préférable selon l'invention de disposer les points d'introduction de cet oxygène chaud de façon à favoriser le développement d'une flamme dans laquelle la combustion se fait de façon progressive sur le trajet de cette flamme. Cette technique est connue dans son principe. Elle est désignée sous le nom de "combustion étagée".

Le but de la combustion étagée est de limiter la température la plus élevée atteinte dans la flamme, en distribuant la combustion sur la longueur de celle-ci par l'apport progressif de l'oxygène. Un tel apport progressif est obtenu notamment en effectuant l'introduction de l'oxygène dans le four à distance de l'injection du combustible. De la sorte les flux gazeux se rencontrent après avoir progressé à l'intérieur du four, à distance de la paroi sur laquelle se trouve le brûleur.

Pour favoriser encore la progressivité de la flamme, il est avantageux d'introduire l'oxygène chaud à partir de plusieurs points de plus en plus distants de celui d'injection du combustible.

Pour tenir compte de l'expansion du flux gazeux au cours de sa progression dans la flamme, expansion qui tient compte de l'expansion naturelle du jet émis et de l'élévation de température, les quantités d'oxygène mises en œuvre sont avantageusement d'autant plus importantes qu'elles pénètrent dans ce flux plus en aval dans la flamme.

Pour des raisons d'ordre pratique les points d'admission, sont nécessairement en petit nombre. Ils sont avantageusement disposés de façon symétrique par rapport au point d'introduction du combustible de telle sorte que la flamme se développe également de manière symétrique.

Avantageusement le nombre d'admissions d'oxygène chaud de part et d'autre du point d'introduction du combustible ne dépasse pas trois et de préférence est égal à deux.

Les proportions d'oxygène introduites comme indiqué sont avantageusement plus importantes en s'éloignant du point d'introduction du combustible. Partant de cette condition, le rapport des quantités introduites en deux points consécutifs dont la distance au point d'introduction du combustible va croissant, est de préférence Qₙ/Qₙ₊₁<1, et avantageusement tel que 0,2<Qₙ/Qₙ₊₁<0,6.

Sur un même brûleur le réglage des quantités d'oxygène chaud est obtenu de préférence sans interposer des éléments tels que des vannes dont les organes sont susceptibles d'être rapidement corrodés. De préférence les proportions distribuées sont déterminées par des ajutages de dimensions appropriées disposées en amont de l'introduction dans le brûleur, et en aval de l'échangeur thermique dans lequel l'oxygène est chauffé.

Dans les interventions d'entretien des injecteurs de combustible présentées ci-dessus, il va de soi que l'injecteur unique étant arrêté momentanément, tout le brûleur est interrompu. Les canalisations d'injection du combustible sont extraites du brûleur pour remise en état. Les conduits associés pour l'oxygène froid sont retirés simultanément. Cette opération ne pose en principe pas de difficulté dans la mesure où les tubes en question sont raccordés aux installations en amont par des moyens (raccords, joints...) que l'absence d'une corrosion excessive par les produits véhiculés permet de réaliser dans des matériaux et suivant des structures traditionnelles. Le démontage de ces éléments est d'origine prévu pour se prêter à ces travaux de maintenance.

La disposition du brûleur comportant une seule injection de combustible, nécessite cependant l'interruption du brûleur. Cette interruption ne compromet pas le fonctionnement du four lorsque celui-ci comporte un nombre élevé de brûleurs, et que l'apport énergétique interrompu, qui ne représente qu'une fraction de l'ensemble, peut même le cas échéant être compensé par l'accroissement momentané du régime des brûleurs voisins. La distribution énergétique est alors seulement légèrement déplacée dans l'espace du four.

Si néanmoins on veut encore minimiser cette modification de la distribution spatiale, il est possible d'utiliser des brûleurs comportant plus d'un point d'injection du combustible, et notamment deux points.

Le fonctionnement de ces brûleurs suit globalement le processus décrit ci-dessus à propos des brûleurs ne comportant qu'un seul point d'introduction. En régime normal les deux injecteurs sont alors avantageusement en fonctionnement simultané et de préférence concourent chacun pour moitié à l'apport de combustible. Lors des opérations d'entretien, l'un des injecteurs peut être interrompu l'autre restant en fonctionnement et son régime étant éventuellement modifié pour compenser tout ou partie de l'apport de l'injecteur interrompu. Une fois le premier injecteur remis en état, le processus est répété sur le second. Dans ces conditions le brûleur peut délivrer une puissance qui est peu, ou pas modifiée par rapport à celle correspondant au fonctionnement ordinaire.

Dans la proposition précédente les introductions de combustible sont destinées au même combustible. Il est possible par ailleurs de disposer sur le même brûleur deux ou plus, amenées de combustible pour différents types de combustibles, notamment des combustibles gazeux d'une part et des combustibles liquides comme les fuels lourds, d'autre part.

L'intérêt que présentent les brûleurs susceptibles de fonctionner avec différents types de combustibles est d'abord lié aux qualités de ces combustibles. L'utilisation de gaz naturel par exemple est connue pour conduire à une teneur en eau accrue dans l'atmosphère du four par rapport à ce qui est obtenu par exemple avec du fuel lourd. Dans le cas des fours de fusion de verrerie la nature de cette atmosphère est un élément qui influe directement sur le processus d'affinage et sur la teneur en eau du verre produit. Le choix du combustible est donc un élément important de l'ensemble.

Toujours pour l'utilisation des combustibles liquides, comme les fuels lourds, il faut tenir compte des conditions d'atomisation de ces combustibles. Si en principe la pulvérisation du liquide peut être obtenue par des moyens purement mécaniques, le plus usuel est cependant de procéder au moyen d'un gaz de propulsion (air, vapeur d'eau, gaz naturel, oxygène...). Le volume de ce dernier est sans commune mesure avec celui de l'oxygène primaire, et en principe est de peu d'importance dans les mécanismes de combustion. Ce gaz n'est cependant pas entièrement indifférent. En particulier si on utilise communément de l'air sous pression, on enrichit l'atmosphère de la flamme en azote et par suite on accroît le risque de formation de NOx. L'utilisation de vapeur d'eau ne présente pas cet inconvénient mais la capacité calorifique de l'eau est élevée, ce qui accroît un peu la consommation énergétique.

Des considérations d'ordre économique interviennent aussi dans le choix du combustible. D'une part les prix respectifs, notamment du gaz et du fuel lourd, sont sujets à des variations sensibles dans le temps. Mais d'autre part et surtout, le coût de l'approvisionnement en gaz dépend pour partie des conditions négociées avec les fournisseurs. Ces derniers consentent des tarifs avantageux lorsque la fourniture est assortie de modalités suspensives pour tenir compte notamment des variations importantes de la demande. Selon ces modalités la fourniture peut être interrompue momentanément. Pour bénéficier de ces conditions sans pour autant interrompre la production il est donc nécessaire de pouvoir passer d'un combustible à un autre pratiquement instantanément. Pour cela il est nécessaire de disposer de brûleurs susceptibles de travailler avec ces divers combustibles.

L'invention propose aussi les brûleurs correspondant aux dispositions énoncées précédemment ainsi que des moyens associés à ces brûleurs lesquels sont présentés dans la suite de la description en se reportant aux figures annexées, avec des détails complémentaires sur leur mise en œuvre. Pour ces figures :
- la figure la est une vue schématique en coupe d'un brûleur utilisé selon l'invention ;
- la figure 1b représente en vue de face le brûleur de la figure la;
- la figure 2a est une vue analogue à celle de la figure la le brûleur comprenant deux alimentations en combustible ;
- la figure 2b est une vue de face du brûleur de la figure 2a ;
- la figure 3 est une vue du brûleur de la figure1a, présentant en partie les alimentations du brûleur ;
- la figure 4 est analogue à la précédente, et concerne le brûleur de la figure 2a ;
- la figure 5 présente schématiquement un type de circuit d'alimentation en oxygène chaud d'un côté d'un four muni de brûleurs.

Le brûleur de la figure la comprend un bloc réfractaire 1 qui entre dans la constitution de la paroi du four. Ce bloc est avantageusement constitué de plusieurs parties assemblées les unes aux autres par une armature non représentée, située du côté extérieur par rapport au four. Le bloc réfractaire est traversé de plusieurs canalisations qui débouchent sur la face interne du four et qui permettent l'introduction du combustible et de l'oxygène.

La disposition des différentes canalisations d'alimentation est fonction du régime de combustion recherché d'une part, et de la forme générale de la flamme d'autre part.

Dans les fours fonctionnant en oxy-combustion, un avantage substantiel réside dans l'absence d'azote qui à très haute température conduit à la formation d'oxydes NOx. Néanmoins les grands fours industriels ne peuvent être parfaitement étanches à l'atmosphère extérieure. Il pénètre toujours un peu d'air, et donc d'azote, même si l'on s'efforce de maintenir une certaine étanchéité notamment de façon dynamique.

La présence même résiduelle d'azote peut conduire à la présence en quantité réduite de NOx. Les taux de ces polluants devant être aussi faibles que possible, il est avantageux de régler le régime du four fonctionnant en oxy-combustion de manière à minimiser encore leur formation.

Il est connu que la formation des oxydes d'azote est favorisée par les températures les plus élevées atteintes dans les flammes. La mise en œuvre des brûleurs selon l'invention vise donc, pour une même puissance développée, à limiter les températures les plus hautes localement présentes dans les flammes.

Une technique pour limiter les températures consiste à faire en sorte que le combustible soit progressivement mis en contact avec le comburant. Le régime est qualifié habituellement de "combustion étagée".

Pour obtenir le régime de combustion étagée, une faible proportion de l'oxygène est introduite conjointement au combustible de telle sorte que la flamme soit stabilisée au point d'injection. Mais la quantité d'oxygène doit rester faible pour ne pas concentrer une part trop importante de l'énergie de combustion sous un faible volume et accroître la température de la flamme.

Au-delà du point d'injection la flamme se trouve successivement alimentée en oxygène par le mélange de cette flamme primaire avec les jets d'oxygène émis à partir des buses d'injection situées sur la paroi à une certaine distance de la buse d'injection du combustible et de l'oxygène primaire. Ces alimentations secondaires sont disposées en fonction des caractéristiques des flux gazeux (débit, vitesse d'émission, température), de l'expansion de ceux-ci et de la longueur de la flamme recherchée.

Dans la représentation des figures la et 1b, l'alimentation en combustible est schématisée par la conduite 2. Cette conduite est concentrique à la conduite 3 amenant l'oxygène primaire. L'ensemble est disposé au centre du brûleur.

De part et d'autre de l'alimentation primaire deux alimentations "secondaires" 4, et "tertiaires" 5 complètent l'apport d'oxygène nécessaire pour assurer la combustion complète du combustible injecté en 2.

La mise en œuvre de ce type de brûleur peut avantageusement suivre les prescriptions énoncées dans les publications WO 02/081967A et WO 2004/094902A, tant pour ce qui concerne la distribution spatiale des injections, que pour les quantités respectives de combustible et d'oxygène utilisées.

La répartition de l'oxygène sur les canalisations est avantageusement telle que la quantité croît avec la distance qui sépare son point d'injection de celui du combustible. Dans la forme présentée aux figures la et 1b, les alimentations par les conduites 4 sont avantageusement moins importantes que celles effectuées à partir des canalisations 5.

A titre indicatif le rapport de l'alimentation respective par les canalisations 4 (Q₁) et 5 (Q₂) est par exemple compris entre 0,2 et 0,6.

Pour obtenir une flamme dont la forme d'ensemble est sensiblement plane les axes des différentes canalisations sont avantageusement disposés dans un même plan. Une flamme plane est avantageuse dans le cas des fours de fusion de verrerie. Elle permet d'exposer directement la plus grande surface possible du bain au rayonnement issu de la flamme, ou indirectement celui des réfractaires exposés à cette flamme, notamment ceux de la voûte du four.

La disposition des injections peut être sensiblement différente lorsque la forme de la flamme n'est pas commandée par un échange thermique avec une surface plane. Les alimentations peuvent notamment être disposées de façon concentrique autour du point d'injection primaire.

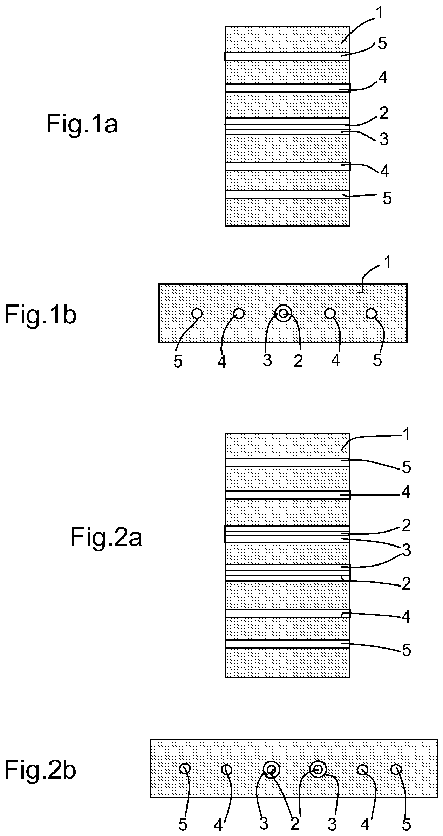

Les brûleurs schématisés aux figures 2a et 2b reprennent la structure générale précédente. Ils s'en distinguent par la présence de deux alimentations en combustible 2 et en oxygène primaire 3.

La disposition de deux injections qui peuvent être aussi proches l'une de l'autre que les conditions d'encombrement le permettent, est destinée à faciliter les opérations de maintenance. Plus les injections sont proches, plus le mode de fonctionnement s'apparente à celui dans lequel une seule alimentation primaire est aménagée.

Le fonctionnement des brûleurs, quelles que soient les précautions prises, peut conduire à un encrassement par les produits de décomposition des combustibles. Pour minimiser ce risque, les extrémités des buses sont avantageusement en léger retrait par rapport à la paroi interne de du four. Ce retrait est aussi motivé par le souci de protection de l'extrémité de la canne d'injection. En procédant de cette façon, la température est sensiblement inférieure à celle régnant dans le four notamment du fait de la circulation même du combustible et de celle de l'oxygène "froid". A noter que même si le combustible est préchauffé pour accroître le rendement énergétique, les températures atteintes sont limitées pour ne pas risquer la décomposition thermique dans les canalisations d'alimentation.

Les opérations de maintenance doivent s'effectuer sur le four sans en interrompre le fonctionnement. Il est nécessaire de s'assurer que ces opérations ne modifient pratiquement pas le régime de fonctionnement. L'arrêt d'un brûleur sur les grands fours de fusion verriers qui en comportent habituellement entre 6 et 12, peut être compensé momentanément par un accroissement correspondant du régime des brûleurs voisins. Il en résulte néanmoins une modification de l'équilibre général de la courbe de feu, et peut être aussi de la circulation des fumées lesquelles sont utilisées comme indiqué plus loin dans le cycle de chauffage de l'oxygène.

Une solution alternative pour minimiser les influences des opérations de maintenance réside par exemple dans l'utilisation de brûleurs comportant deux injections de combustible. Avantageusement, les deux injections sont alors utilisées simultanément. Dans la nécessité de procéder à une maintenance, un de ces moyens d'injection est momentanément interrompu. Eventuellement la seconde injection prend le relais d'une partie ou de la totalité de l'alimentation correspondant à celle de l'injecteur à l'arrêt.

Cette façon de procéder maintient de manière presque identique la distribution spatiale de l'énergie dans le four.

Lorsque le premier injecteur est replacé, le second peut être à son tour l'objet de la maintenance.

Dans ces opérations de maintenance, le plus usuel consiste à retirer la lance d'injection du combustible du bloc réfractaire par lequel elle pénètre dans le four. L'ouverture dégagée est obstruée momentanément pour prévenir la pénétration d'air.

Les alimentations en combustible ne nécessitent pas de façon générale, des canalisations offrant des caractéristiques particulières de résistance à la corrosion. Les matériaux usuels comme les aciers inoxydables traditionnels suffisent, et surtout ces canalisations peuvent supporter des raccords, des vannes et autres éléments susceptibles d'être démontés à l'occasion de ces opérations de maintenance.

La dépose de ces canalisations ne soulève pas de grands problèmes. La question ne se pose pas d'avantage lorsque l'oxygène primaire est injecté avec le combustible à une température relativement basse, par exemple à une température ne dépassant pas 100°C.

Pour porter le rendement énergétique des brûleurs au plus haut niveau, il est avantageux d'utiliser de l'oxygène préchauffé à des températures qui peuvent atteindre ou dépasser 550°C. Dans ces conditions, les conduits de l'oxygène doivent présenter des qualités de résistance très particulières et il faut dans toute la mesure du possible éviter ou réduire le plus possible les soudures ou les éléments de raccord. Pour cette raison les canalisations d'amenée de l'oxygène chaud sont dans l'ensemble maintenues en place lors des opérations de maintenance.

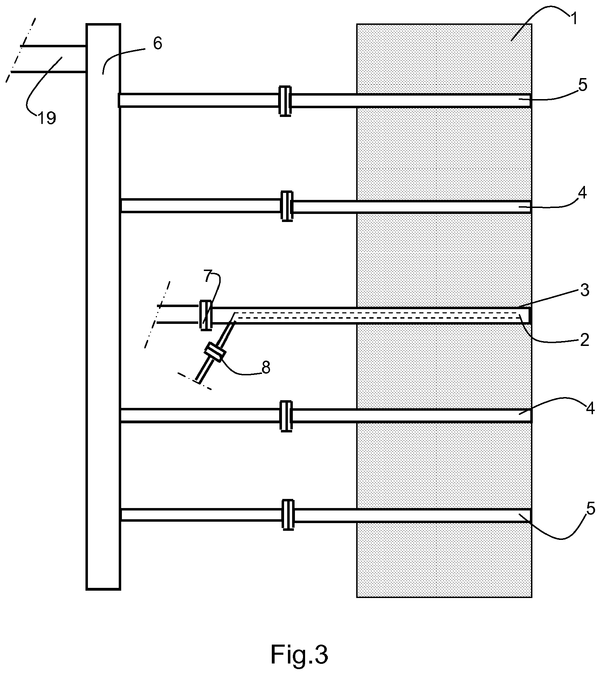

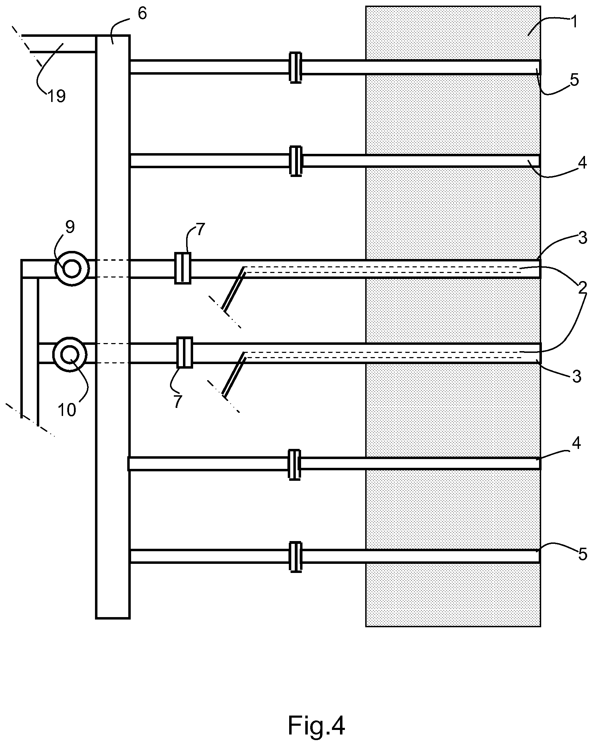

Les figures 3 et 4 reprennent les éléments des brûleurs des figures 1 et 2, en y intégrant des éléments supplémentaires d'alimentation en oxygène chaud.

Pour l'alimentation en oxygène chaud, les canalisations 4 et 5 sont raccordées à une nourrice 6. Entre la nourrice 6 et le brûleur on évite la présence de vanne. La distance entre la nourrice et le brûleur est par ailleurs aussi courte que le permet l'encombrement à proximité du four.

Les canalisations représentées droites peuvent présenter des courbures. Il est préférable que ces courbures soient aussi peu accentuées que possible pour minimiser l'impact de l'oxygène chaud sur leurs parois, qui, à terme, est susceptible d'entraîner leur érosion.

La quantité d'oxygène répartie sur chaque canalisation est déterminée de façon permanente par les dimensions d'ajutages localisés soit sur les canalisations soit à la jonction des canalisations 4 et 5 avec la nourrice 6.

La nourrice est pour sa part alimentée par une canalisation 19 laquelle est raccordée à un échangeur thermique, non-représenté sur ces figures, échangeur dans lequel l'oxygène est chauffé. Faute de pouvoir interposer des vannes sur le trajet de l'oxygène chaud, les modifications du régime se commandent à partir de l'oxygène froid introduit dans l'échangeur. Ces modifications sont nécessairement limitées.

Les alimentations en combustible et oxygène froid représentées aux figures 3 et 4 sont constituées de la canalisation 3. Cette canalisation 3 enveloppe la canalisation de combustible 2. Ces deux canalisations peuvent être désolidarisées de leur circuit d'alimentation respectif, au niveau des brides 7 et 8. Une fois ces brides défaites les canalisations 2 et 3 peuvent être extraites du réfractaire pour procéder à leur remise en état.

Les figures 2 et 3 montrent de façon schématique l'agencement qui peut être celui dans lequel le combustible passant dans la canalisation centrale 2 est gazeux. Lorsque le combustible est liquide, son introduction requiert l'utilisation de moyens permettant l'atomisation de ce liquide. En particulier lorsque l'atomisation est effectuée au moyen d'un gaz (vapeur, air...) la canalisation d'amenée du combustible doit encore comprendre une conduite d'amenée de ce gaz d'atomisation jusqu'à proximité de l'injection.

Comme représenté à la figure 4, l'alimentation en oxygène "froid" par les canalisations 3, peut être régulée séparément par exemple au moyen des vannes 9 et 10.

Comme proposé dans la demande européenne non publiée n°08 102 880, déposée le 25/03/08, il est préférable, toujours pour minimiser les difficultés liées au transport de l'oxygène chaud, de disposer l'échangeur thermique dans lequel l'oxygène est chauffé le plus près possible du brûleur. Pour les mêmes raisons le nombre de brûleurs alimentés à partir d'un échangeur est limité. De préférence chaque échangeur n'alimente pas plus de deux brûleurs, et de façon particulièrement préférée chaque échangeur n'est relié qu'à un brûleur. De cette façon le débit d'oxygène peut être réglé pour chaque brûleur indépendamment des autres brûleurs, et le réglage peut être effectué sur l'oxygène avant qu'il ne passe dans l'échangeur thermique.

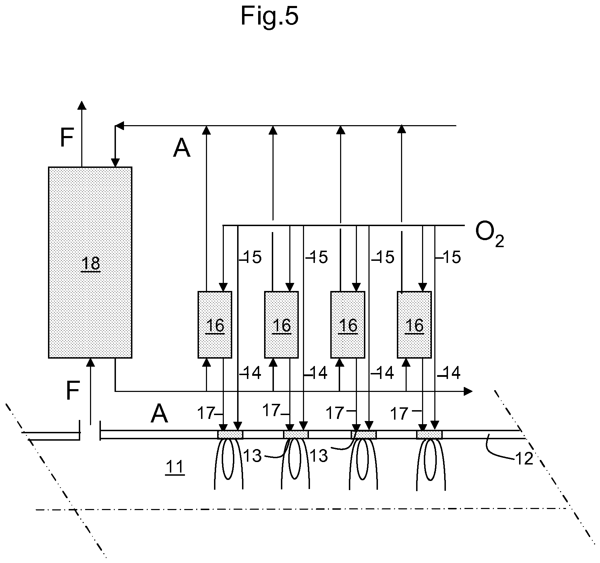

La figure 5 montre de façon schématique un ensemble d'alimentation en oxygène d'un four, par exemple destiné à la fusion de matériaux verriers.

Le four 11 est représenté partiellement en vue de dessus. Sa paroi réfractaire latérale 12, porte une série de brûleurs schématisés 13 insérés dans la paroi. Chaque brûleur 13 est alimenté de deux façons en oxygène. Une première série de conduites 14 achemine de l'oxygène froid comme précisé précédemment, pour alimenter la combustion primaire. Une seconde série de conduites 15, alimente les échangeurs de chaleur 16. A la sortie de ces échangeurs l'oxygène chaud est transporté jusqu'aux brûleurs par des canalisations 17 représentant globalement les différentes alimentations en oxygène chaud de chaque brûleur.

Dans le schéma de la figure 5, les échangeurs thermiques 16 font circuler à contre courant de l'oxygène un fluide caloporteur préalablement chauffé. Dans le mode présenté le chauffage de ce fluide caloporteur est conduit dans un récupérateur 18 dans lequel circulent les fumées F sortant du four 11.

Si en principe il est possible de procéder à un échange de chaleur directement entre les fumées et les produits à préchauffer, le souci de procéder dans les meilleures conditions d'efficacité et de sécurité conduit à des installations d'échange plus complexes et notamment par l'utilisation du fluide caloporteur intermédiaire.

Dans un premier "récupérateur" 18 les fumées réchauffent le fluide intermédiaire, par exemple de l'air, de l'azote, du CO₂ ou tout fluide approprié lequel circule par exemple en boucle entre ce récupérateur et les échangeurs 16 dans lesquels il réchauffe l'oxygène. Une alternative pour le fluide intermédiaire comme de l'air, est de ne pas utiliser la boucle et de récupérer l'air chaud à la sortie des échangeurs secondaires par une chaudière ou un autre moyen de récupération d'énergie.

## Revendications

1. Procédé d'alimentation d'un brûleur de four de fusion du verre fonctionnant en oxy-combustion, comprenant l'injection d'oxygène et l'injection de combustible, l'injection d'oxygène pour un même brûleur étant réalisée à partir de plusieurs points distants de l'injection de combustible de manière à développer une combustion étagée, **caractérisé en ce que** ' la majeure partie de l'oxygène injecté est préalablement chauffée en amont du brûleur , une fraction de l'oxygène n'excédant pas 10% de l'ensemble étant injectée sans chauffage préalable à proximité immédiate de l'injection du combustible, stabilisant la combustion au niveau de cette injection.

2. Procédé selon la revendication 1 dans lequel la fraction d'oxygène injectée à proximité immédiate de l'injection du combustible représente de 1,5 à 7,% de l'ensemble de l'oxygène.

3. Procédé selon l'une des revendications précédentes dans lequel les injections d'oxygène préalablement chauffé sont situées à distance de la, ou des injections de combustible, et de manière symétrique par rapport à ces dernières.

4. Procédé selon la revendication 3 comprenant au moins deux séries d'injections d'oxygène chaud de part et d'autre de l'injection de combustible.

5. Procédé selon la revendication 4 dans lequel la part d'oxygène chaud injectée est d'autant plus importante que l'injection est faite en un point plus éloigné de la ou des injections de combustible.

6. Procédé selon la revendication 4 comprenant de part et d'autre de la ou des injections de combustible, deux séries d'injection d'oxygène chaud, les distances entre la ou les injections de combustible avec le point d'injection en oxygène chaud le plus proche étant sensiblement du même ordre que la distance séparant le premier et le second point situés du même côté de l'injection de combustible.

7. Procédé selon la revendication 6 dans lequel la distance de l'injection en oxygène chaud la plus proche de l'injection du combustible est au plus égale à celle de l'injection qui en est la moins proche.

8. Procédé selon la revendication 7 dans lequel l'injection en oxygène chaud la plus proche de l'injection du combustible est comprise entre 20 et 40% de celle de l'injection la plus éloignée.

9. Procédé selon l'une quelconque des revendications précédentes comportant au moins deux injections de combustible et d'injections d'oxygène non chauffé à proximité desinjections du combustible, identiques, chacune de ces injections pouvant fonctionner indépendamment.

10. Procédé selon l'une des revendications 1 à 8 comprenant au moins deux injections de combustible, chacune dédiée à un combustible donné.

11. Procédé selon la revendication 10 comprenant l'injection de combustible gazeux et l'injection de combustible liquide.

## Patentansprüche

1. Verfahren zur Einspeisung für einen Glasschmelzofen, der mit Sauerstoffverbrennung betrieben wird, umfassend die Injektion von Sauerstoff und die Injektion von Brennstoff, wobei die Injektion von Sauerstoff für denselben Brenner aus mehreren Punkten entfernt von der Injektion des Brennstoffs durchgeführt wird, um eine abgestufte Verbrennung zu entwickeln, **dadurch gekennzeichnet, dass** der mehrheitliche Teil des eingebrachten Sauerstoffs zuvor stromaufwärts von dem Brenner erhitzt wird, wobei eine Fraktion des Sauerstoffs 10 % der injizierten Gesamtheit nicht überschreitet, ohne vorheriges Erhitzen in unmittelbarer Nähe der Injektion des Brennstoffs, wobei die Verbrennung auf der Höhe dieser Injektion stabilisiert wird.

2. Verfahren nach Anspruch 1, wobei die Sauerstofffraktion, die in unmittelbarer Nähe der Injektion des Brennstoffs injiziert wird, von 1,5 bis 7 % der Gesamtheit des Sauerstoffs ausmacht.

3. Verfahren nach einem der vorhergehenden Ansprüche, wobei die Injektionen des zuvor erhitzten Sauerstoffs in einer Distanz von der oder den Injektionen des Brennstoffs und in symmetrischer Weise in Bezug auf diese Letzteren angeordnet sind.

4. Verfahren nach Anspruch 3, umfassend mindestens zwei Serien von heißen Sauerstoffinjektionen auf beiden Seiten der Injektion des Brennstoffs.

5. Verfahren nach Anspruch 4, wobei der Teil des injizierten heißen Sauerstoffs umso größer ist, desto mehr die Injektion an einem am weitesten von der oder den Injektionen des Brennstoffs entfernten Punkt durchgeführt wird.

6. Verfahren nach Anspruch 4, umfassend auf beiden Seiten der Injektion oder der Injektionen des Brennstoffs zwei Serien von heißen Sauerstoffinjektionen, wobei die Distanzen zwischen der oder den Injektionen des Brennstoffs mit dem nächstliegenden Injektionspunkt von heißem Sauerstoff im Wesentlichen in derselben Größenordnung liegen wie die Distanz, die den ersten und den zweiten Punkt trennt, welche auf derselben Seite der Injektion des Brennstoffs angeordnet sind.

7. Verfahren nach Anspruch 6, wobei die Distanz der Injektion von heißem Sauerstoff, die der Injektion des Brennstoffs am nächsten liegt, höchstens gleich jener der Injektion ist, die dieser am wenigsten nahe liegt.

8. Verfahren nach Anspruch 7, wobei die Injektion von heißem Sauerstoff, die der Injektion des Brennstoffs am nächsten liegt, zwischen 20 und 40 % jener der am weitesten entfernten Injektion liegt.

9. Verfahren nach einem der vorhergehenden Ansprüche, umfassend mindestens zwei Injektionen von Brennstoff und identische Injektionen von nicht erhitztem Sauerstoff in der Nähe der Injektionen des Brennstoffs, wobei jede dieser Injektionen unabhängig betrieben werden kann.

10. Verfahren nach einem der Ansprüche 1 bis 8, umfassend mindestens zwei Injektionen von Brennstoff, wobei jede für einen gegebenen Brennstoff dediziert ist.

11. Verfahren nach Anspruch 10, umfassend die Injektion von gasförmigem Brennstoff und die Injektion von flüssigem Brennstoff.

## Claims

1. Process for supplying a glass melting furnace operating in oxy-combustion mode, comprising oxygen injection and fuel injection, the oxygen injection for one and the same burner being carried out from several points distant from the fuel injection so as to develop a staged combustion, **characterized in that** the major portion of the oxygen injected is preheated upstream of the burner, a fraction of the oxygen not exceeding 10% of all the oxygen being injected without preheating in immediate proximity to the fuel injection, stabilizing the combustion at the level of this injection.

2. Process according to Claim 1, in which the oxygen fraction injected in immediate proximity to the fuel injection represents from 1.5 to 7 %, of all the oxygen.

3. Process according to either of the preceding claims, in which the injections of preheated oxygen are located at a distance from the fuel injection(s), and symmetrically with respect to the latter.

4. Process according to Claim 3, comprising at least two series of hot-oxygen injections on either side of the fuel injection.

5. Process according to Claim 4, in which the part of hot oxygen injected is all the greater, the further away it is injected from the fuel injection(s).

6. Process according to Claim 4, comprising, on either side of the fuel injection(s), two series of hot-oxygen injection, the distances between the fuel injection(s) and the closest point of hot-oxygen injection being substantially of the same order as the distance separating the first and second points located on the same side as the fuel injection.

7. Process according to Claim 6, in which the distance of the hot-oxygen injection closest to the fuel injection is at most equal to that of the injection which is the furthest away therefrom.

8. Process according to Claim 7, in which the hot-oxygen injection closest to the fuel injection is between 20 and 40% of that of the injection furthest away.

9. Process according to any one of the preceding claims, comprising at least two fuel injections and non-heated oxygen injections in proximity to the fuel injections, which are identical, it being possible for each of these injections to operate independently.

10. Process according to one of Claims 1 to 8, comprising at least two fuel injections, each one dedicated to a given fuel.

11. Process according to Claim 10, comprising injection of gaseous fuel and the injection of a liquid fuel.
